# EUROPEAN PATENT SPECIFICATION

(11) **EP 3 995 534 B1**
(45) Date of publication and mention of the grant of the patent: **22.10.2025**
(21) Application number: 21186321.2
(22) Date of filing: 19.07.2021
(51) Int. Cl.: C08K 5/103, C08L 23/04

(54) **POLYMER RESIN AND USES THEREOF**
POLYMERHARZ UND VERWENDUNGEN DAVON
RÉSINE DE POLYMÈRE ET SES UTILISATIONS

(30) Priority: 10.11.2020 MY PI2020005905
(43) Date of publication of application: 11.05.2022
(73) Proprietor: Gaia Plas Berhad, 42500 Banting, Selangor (MY)
(72) Inventor: BINTI SHAHAR, Norsharina, 40400 SHAH ALAM, SELANGOR (MY); BIN JALAL, Abdul Qy'Yum Mustaqem, 40400 SHAH ALAM, SELANGOR (MY); BIN MOHAMAD DAUD, Ahmad Rafizan, 40450 SHAH ALAM, SELANGOR (MY); BIN ISMAIL, Muhammad Hussain, 40450 SHAH ALAM, SELANGOR (MY); SUBUKI, Istikamah, 40450 SHAH ALAM, SELANGOR (MY); RAMLEE, Nur Azrini, 40450 SHAH ALAM, SELANGOR (MY)
(74) Representative: Cabinet Chaillot

(56) References cited:
- US-A1- 2013 004 691

## Description

### FIELD OF THE INVENTION

The present invention relates generally to thermoplastic polymer blends. More particularly it relates to a polymer blends comprising of polyolefins and renewable component palm stearin and articles made thereof.

### BACKGROUND OF THE INVENTION

Plastics derived from fossil fuels are widely used in many industrial applications and consumer goods. The popularity of plastics is attributed to its availability and versatile characteristics. Due to its favourable thermal and mechanical properties, good chemical and corrosion resistance, and being light weight and low-cost material, global production of fossil-based plastics has seen steady growth over the last decade.

Widespread utilization of petroleum-based plastic resulted in large amount of plastic wastes that are either end up in landfills or littered in soil and in water bodies such as rivers and oceans. Without proper disposal treatment, there are concerns of release of hazardous contaminants to air, land and ground waters. Recent data also points to increasing level of microplastic pollution in the oceans that are detrimental to aquatic life.

It is believed that plastic pollution can be minimized by using natural biodegradable materials as a substitute to fossil-based polymers. Polymer blends consisting of a fossil-based polymer and biodegradable component are available and known in the art. Polyethylene (PE), polyethylene terephthalate (PET), polypropylene (PP) and polystyrene (PSt) in combination with natural polymers such as starch, polylactic acid (PLA) and polyhydroxyalkanoate (PHA) have been used at varying proportions to enhance biodegradation process.

For example, the United States of America patent US6630543B1 discloses a method of making a biodegradable polymer composition including the steps of providing a first component being either one of a thermoplastic poly(hydroxy ester ether) or a synthetic, hydroxy-functional polymer and providing a second component being a natural polymer.

The International Publication WO 2017/004210A1 teaches on the strength characteristics and biodegradation of articles produced using one or more petrochemical-based polymers and one or more carbohydrate-based polymers. A compatibilizer can optionally be included in the article.

The US Application US2013/0154151A1 relates to the method for forming a thermoplastic composition that contains a combination of a renewable biopolymer with a polyolefin. The biopolymer and polyolefin are supplied to the extruder at a feed section. The plasticizer is directly injected into the extruder in the form of a liquid so that it forms a thermoplastic biopolymer in situ within the extruder and then a homogeneous blend.

The US Application US2017/0362418 discloses the methods for rendering biodegradable a plastic material that is not itself biodegradable, by blending the plastic material with a carbohydrate-based polymeric material that is formed from one or more starches, and a plasticizer (e.g., glycerin). The carbohydrate-based polymeric material is less crystalline than the starting starch materials, e.g., being substantially amorphous, and having a crystallinity of no more than 20%. Third party testing shows blends of such materials render the entire blend biodegradable, believed to be due to the low crystalline substantially amorphous carbohydrate-based polymeric material breaking the hygroscopic barrier associated with the non-biodegradable plastic material, so that when blended together, both the plastic material and the carbohydrate-based polymeric material are biodegradable.

The International Publication WO2010/120673Al relates to blends of polyolefins and a biodegradable polymer, such as polylactic acid (PLA) and polyhydroxy butyrate, which are compatibilized by a functionalized olefin (meth)acrylic copolymer. Since PLA and polyolefins are not miscible, the use of the compatibilizer improves the compatibility, thereby improving the processability, and particularly the melt strength and melt elasticity.

The International Publication WO2014/151221Al teaches on a compatibilized thermoplastic polymer composition having from 5% to 95% bio-based content and comprising thermoplastic starch; polyolefin; and an effective amount of compatibilizer. The compatibilizer can include polar homopolymers and co - polymers with inherent polyolefin compatibility; non - polymeric materials with both polar and non-polar functionality; low molecular weight materials with both polar and non-polar functionality; and bulk phase/in-situ compatibilizers.

The Chinese Application CN1468273A claims a biodegradable polymer blend, the blend of at least one "hard" biopolymer and at least one "soft" polymer, applied in layer product layer, wraps and other packaging materials. Although the hard and soft polymers each having a specific intrinsic advantages, but finds that certain blends of hard and soft polymer having more excellent than the hard or soft polymer itself of synergistic performance. Biodegradable polymers include polyester, polyamide and a thermoplastic processing of starch. The polymer blend may optionally contain an inorganic filler. Films and sheets made from the polymer blend can be textured to enhance its fuller handle.

The granted EP patent EP0947559B1 teaches on polymeric compositions comprising thermoplastic starch and a thermoplastic polymer incompatible with starch, in which the starch constitutes the dispersed phase and the thermoplastic polymer constitutes the continuous phase, selected: A) from compositions comprising an agent with an interfacial effect selected from esters of polyols with mono- or poly-carboxylic acids with dissociation constants within certain limits.

The International Publication WO2011080623A2 relates to a thermoplastic film composition that includes a polymer blend of multiple inherently incompatible polymer components. The composition includes a polymer blend having about 5 wt.% to about 45 wt.% of a plasticized natural polymer, about 5 wt.% to about 40 wt.% of a polyolefin, a biodegradable polymer, and a compatibilizer with both a polar and a non-polar moiety on the same polymer molecule.

The International Publication WO2011130035A1 related to the methods involved in forming biodegradable polymeric compositions such as: providing an olefin based polymer selected from polypropylene, polyethylene, and/or their copolymers and contacting the olefin based polymer with polylactic acid in the presence of a reactive modifier to form the biodegradable polymeric composition, where the reactive modifier is selected from oxazoline-grafted polyolefins, maleated polyolefin-based ionomers, and/or isocyanate-functionalized polyolefins.

The US Application US2013/0004691 discloses a molded article comprising intimate admixtures of thermoplastic polymers and waxes, where the thermoplastic polymer can be e.g. polypropylene, polyethylene, propylene copolymers or ethylene copolymer.

However, all these biodegradable materials discussed in the above studies and prior arts are not readily available for use but rather manufacture through complex and expensive processes, thus their applications are likely restricted to high value articles and products. In addition, polymer blends prepared using the above polymer combination requires the addition of a compatibilizer to enhance adhesion between the two components, reduce the interfacial tension and stabilize the blend's morphology.

To address these weaknesses, a natural biodegradable material palm stearin (PS) has been considered for blending with high-density polyethylene (HDPE) in the present invention. The application of palm stearin in a polymer blends is not known in the art. Palm stearin is a by-product from palm oil and palm kernel oil processing. It is available in abundance, cost effective and easily used without prior pre-treatment required. Most importantly, the PE-PS blends are compatible, thus eliminating the need for compatibilizers. Blends of polyolefins with palm stearin is currently not known in the art. Therefore, it is the objective of the present invention to develop PE-PS thermoplastic blends and composition for use in the making of molded article/container using blow or injection moulding method.

The thermoplastic PE-PS blends can be prepared using an internal mixer unit or an extruder. In the present invention, an extruder was used to melt process the mixture and extruded into pellet form to enhance the material distributions and adhesion, and hence improve its processability. Such polymer resin is suitable for making an article either by using fully PE-PS resin or in combination with inorganic mineral calcium carbonate by blow or injection moulding method. The formulation used in the making of the molded articles was formulated so as the molded article produced shall have characteristics not below those of existing petrochemical-based plastic materials. This invention provides an opportunity to lower the amount of non-biodegradable plastic wastes released to the environment.

### SUMMARY OF THE INVENTION

According to the first aspect of the present invention, there is provided a polymer resin composition which comprises thermoplastic PE-PS blends wherein the thermoplastic PE-PS blends comprise a mixture of: 40 weight% of petroleum-based polyolefin (PE); and 60 weight% of natural biodegradable palm-based stearin (PS). Preferably, the polyolefin further comprises of polyethylene including low density polyethylene (LDPE) or high-density polyethylene (HDPE). The palm stearin that is suitable for use in the present invention is the solid fraction derived from fractionation process of palm oil and palm kernel oil. The preferable grade of palm stearin is refined bleached deodorised (RBD) sourced from both the palm oil and palm kernel oil. The characteristics of the palm stearin as below.

**Table 1 shows the characteristics of the palm stearin**

| Parameters | RBD Stearin Specifications |
|---|---|
| Free fatty acids (FFA), % max | 0.4 |
| Moisture & Impurities, % max | 0.2 |
| Iodine value (IV), max | 48.0 |
| Melting point, °C | 40 to 60 |

According to the second aspect of the present invention, there is provided a process for making PE-PS thermoplastic blends which includes the steps of mixing the polyolefin and palm stearin materials. The mixing process may be carried out using an internal mixer or an extruder machine for melting the mixture in order to obtain uniform dispersion of the materials. In the mixing process, the thermoplastic PE-PS blends are extruded into pellets form to enhance the material distributions and adhesion, and hence improve its processability. For example, the thermoplastic PE-PS blends comprise of high-density polyethylene (HDPE) resins and PS powders may be mixed in a 3D shaker before undergoing melt processing in a single-screw extruder. The melt process is preferably conducted by feeding the materials at a constant feed rate into a series of heated zones set as follows; first zone at room temperature, second zone 170 to 180°C, third zone 180 to 185°C, fourth zone 180 to 185°C and the final zone at 170°C. After the extrusion process, the hot polymeric mass strands are shaped by using a die and cooled in a water bath to allow the polymeric mass strand to be pelletized.
The thermoplastic PE-PS blends are further characterized using thermogravimetric analysis (TGA), differential scanning calorimetry (DSC) analysis.

According to the third aspect of the present invention, there is provided a PE-PS thermoplastic resin which is suitable for use in molded article applications utilizing:
a) fully (100%) PE-PS resin or
b) in combination with inorganic mineral calcium carbonate (CaCO₃) in a specific formula to achieve polymeric properties suitable for the intended use of the products.

According to another aspect of the present invention, the manufacturing of the intended products such as the molded article produced by means of injection molding or blow molding. The preferable grades of the calcium carbonate for use in these applications with softening point between 100 to 120°C, melting point in a range of 115 to 130°C and in pellets form.

According to yet another aspect of the present invention, the use of the polymer resin composition for the manufacture of molded articles usable in various packaging products such as jerry can container. The molded article such as jerry can container produced using HDPE-PS thermoplastic blend comprising high-density polyethylene (HDPE) and palm-based stearin (PS) with calcium carbonate as filler by means of blow molding process. The molded article such as jerry can produced using 100% HDPE-PS resin by blow moulding showed excellent tensile strength performance. One of the advantages of the present invention is that the HDPE-PS thermoplastic blend achieved without addition of a compatibilizer or coupling agent. The extruded thermoplastic HDPE-PS resin also showed comparable thermal and mechanical performance.

### BRIEF DESCRIPTION OF THE DRAWINGS

Figure 1 shows the flowchart of the methods involved in the production of HDPE and PS based jerry can formulation.
Figure 2.1 DSC curve for HDPE/PS (80/20) composite resin
Figure 2.2 DSC curve for raw HDPE
Figure 2.3 DSC curve for raw PS
Figure 2.4 TGA curve obtained from raw HDPE
Figure 2.5 TGA curve obtained from raw PS
Figure 2.6 TGA curve obtained from HDPE/PS (80/20) composite
Figure 2.7 Extruded and palletized HDPE/PS resin produced using 80/20 ratio
Figure 2.8 Low viscosity polymer mix exiting the die
Figure 2.9 HDPE/PS resin produced using 60/40 and 40/60 formulation
Figure 3.1 Finished jerry can molded using 100% HDPE/PS (80/20) composite
Figure 3.2 Water filling and drop test at 5ft height
Figure 3.3 Jerry cans maintained its original shape and form after 144 hours of stacking test
Figure 3.4 Defect to bottom side area after 144 hours stacking test
Figure 3.5 Overall details of second batch blow molding test
Figure 3.6 Blow molding of HDPE/PS polymer composite at 40% PS content
Figure 4.1 ASTM D638 Tensile Test Specimen for Plastics
Figure 4.2 Load versus extension for 100% HDPE
Figure 4.3 Load versus extension for HDPE/PS (80/20) composite
Figure 4.4 Load versus extension for HDPE/PS (60/40) composite at extension scale (a) 300 mm (b) close-up view up to 80 mm
Figure 4.5 Effect of Palm Stearin (PS) on Ultimate Tensile Strength
Figure 4.6 Effect of Palm Stearin (PS) on Modulus of Elasticity
Figure 4.7 Effect of Palm Stearin (PS) on maximum extension at break
Figure 4.8 Samples before and after the tensile test for; (a)100%HDPE, (b) HDPE/PS (80/20) composite and (c) HDPE/PS (60/40) composite
Figure 4.9 Samples mounting technique for SEM analysis

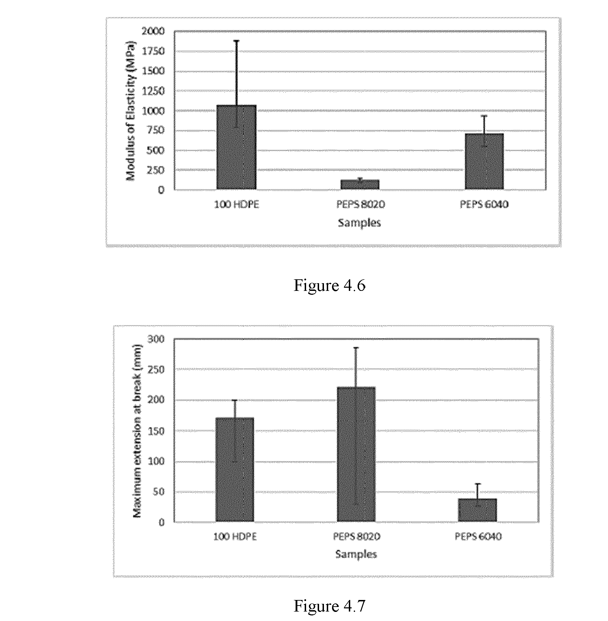

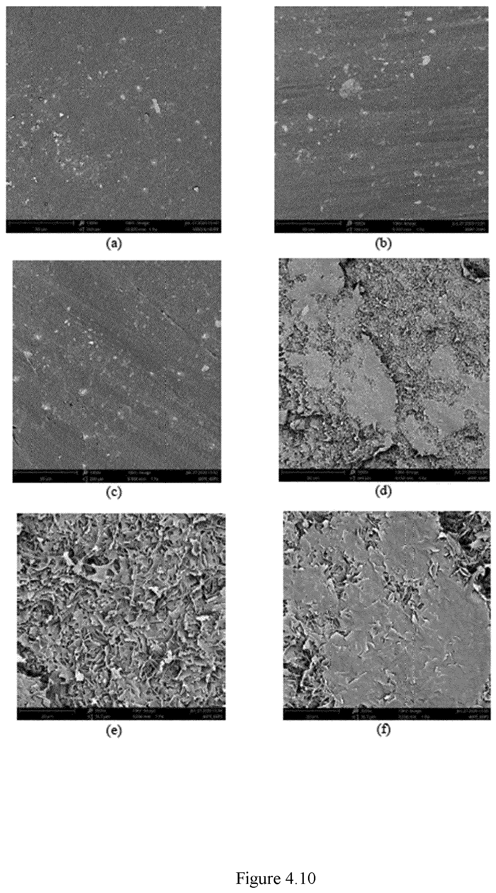

Figure 4.10 SEM images of surface structure of resins with different formulations (a) raw HDPE, (b) HDPE/PS (80/20), (c) HDPE/PS (60/40) and (d) HDPE/PS (40/60) at 1000x magnification. HDPE/PS (60/40) at higher magnification of 3500X (e) and (f)

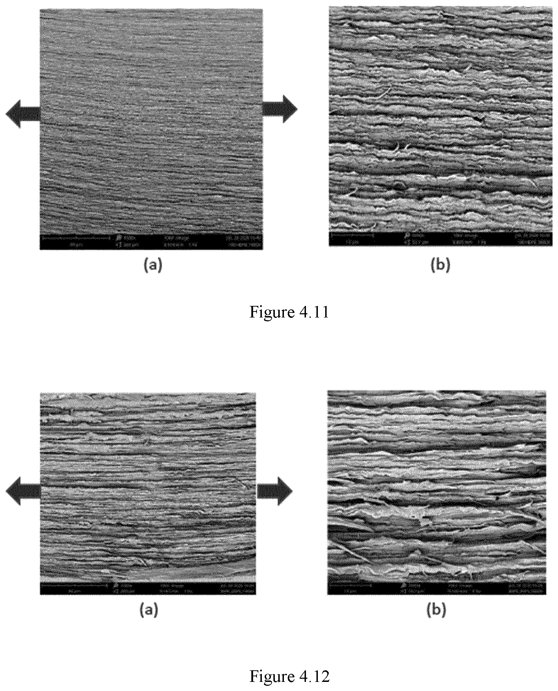

Figure 4.11 Surface edge near necking area for 100%HDPE at 1000X (a) and 5000X (b)
Figure 4.12 Surface edge near necking area for HDPE/PS (80/20) at 1000X (a) and 5000X (b)

### DETAILED DESCRIPTION OF THE INVENTION

In describing some of the preferred embodiments of the invention as may be illustrated in the drawings, specific terminologies will be resorted to for the sake of clarity. However, the invention is not intended to be limited to the specific terms so selected, and it is to be understood that each specific term includes all technical equivalents which operate in a similar manner to accomplish a similar purpose. The invention will now be further illustrated by way of the examples herein, which describe several embodiments of the invention. The principle features of this invention can be employed in various embodiments without departing from the scope of the invention.

As described in the background of the invention earlier, the utilization of petroleum-based plastic resulted in large amount of plastic wastes that are either end up in landfills or littered in soil and in water bodies such as rivers and oceans. There are concerns of release of hazardous contaminants to air, land and ground waters without proper disposal treatment. Recent data also shows that the level of microplastic pollution in the oceans that are detrimental to aquatic life is keep increasing.

It is known that plastic pollution can be minimized by using natural biodegradable materials as a substitute to fossil-based polymers. Polymer blends consisting of a fossil-based polymer and biodegradable component are available and known in the art. Polyethylene (PE), polyethylene terephthalate (PET), polypropylene (PP) and polystyrene (PSt) in combination with natural polymers such as starch, polylactic acid (PLA) and polyhydroxyalkanoate (PHA) have been used at varying proportions to enhance biodegradation process.

However, all these biodegradable materials as discussed above studies and prior arts are not readily available for use but rather manufacture through complex and expensive processes, thus their applications are likely restricted to high value articles and products. In addition, polymer blends prepared using the above polymer combination requires the addition of a compatibilizer to enhance adhesion between the two components, reduce the interfacial tension and stabilize the blend's morphology.

Thus, polymer blends comprising a natural biodegradable material palm stearin (PS) with high-density polyethylene (HDPE) considered being a solution to overcome the addressed problem in the present invention. The application of palm stearin in a polymer blends is not known in the art. Palm stearin is a by-product from palm oil and palm kernel oil processing. It is available in abundance, cost effective and easily used without prior pre-treatment required. Most importantly, the PE-PS blends are compatible, thus eliminating the need for compatibilizers. Blends of polyolefins with palm stearin is currently not known in the art. Therefore, it is the objective of the present invention to develop PE-PS thermoplastic blends and composition for use in the making of molded article/container using blow or injection moulding method.

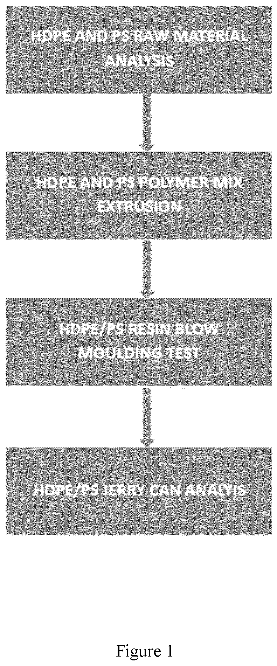

According to the present invention, a process for making PE-PS thermoplastic blends includes the steps of mixing the polyolefin and palm stearin materials is disclosed in detail. The mixing process carried out using an internal mixer or an extruder machine for melting the mixture in order to obtain uniform dispersion of the materials. In the mixing process, the thermoplastic PE-PS blends are extruded into pellets form to enhance the material distributions and adhesion, and hence improve its processability. Such polymer resin is suitable for making an article either by using fully PE-PS resin or in combination with inorganic mineral calcium carbonate by blow or injection moulding method. The formulation used in the making of the molded articles was formulated so as the molded article produced shall have characteristics not below those of existing petrochemical-based plastic materials. This invention provides an opportunity to lower the amount of non-biodegradable plastic wastes released to the environment. Figure 1 shows the flowchart of the methods involved in the production of HDPE and PS based jerry can formulation.

In an embodiment of the present invention, an open scientific literature (journals and patents) and published articles were reviewed to gauge current progress in the area of biodegradable plastic synthesis and formulation. The data was also referred as a guide for the determination of the renewable component starting composition. Notable commercial examples include:
- IKEA-NESTE partnership in the production of bio-based polypropylene (Bio-PP) for application in the IKEA plastic products. A 20% initial concentration of biodegradable components sourced from waste cooking oil and sustainably produced vegetable oils was used in the project beginning 2018.
- Braskem-Biowash-Greco & Guerreiro partnership in developing new packaging from bio-based plastic. Biowash containers will feature a mixture of 60% renewable plastic made from sugar cane and recyclable plastic supplied by Braskem petrochemical.
- Coca-Cola has launched PET bottle (PlantBottleTM) made from sugarcane and sugarcane manufacturing wastes. This bottle is made up of 30% bio-based material and expected to increase the biomaterial content with ongoing research.

Based on the literature reviewed, a 20-60% concentration of bio-material of various origin have been investigated, tested and applied in numerous biodegradable polymer mix. It appears that a minimum of 20wt.% content has the potential to impart biodegradability character to those products investigated. To our best knowledge, there is no published records on the utilization of PS as biodegradable/renewable component in a polymer mix.

The present invention relates to a polymer resin composition comprising thermoplastic PE-PS blends wherein the thermoplastic PE-PS blends comprise a mixture of: 40 weight% of petroleum-based polyolefin (PE); and 60 weight% of natural biodegradable palm-based stearin (PS). The polyolefin further comprises of polyethylene including low density polyethylene (LDPE) or high-density polyethylene (HDPE). The palm stearin that is suitable for use in the present invention is the solid fraction derived from fractionation process of palm oil and palm kernel oil. The preferable grade of palm stearin is refined, bleached and deodorised (RBD) and is sourced from both the palm oil and palm kernel oil. The characteristics of the palm stearin as below.

**Table 1 shows the characteristics of the palm stearin**

| Parameters | RBD Stearin Specifications |
|---|---|
| Free fatty acids (FFA), % max | 0.4 |
| Moisture & Impurities, % max | 0.2 |
| Iodine value (IV,Wijs), max | 48.0 |
| Melting point, °C | 40-60 |

In an embodiment of the present invention, the PE-PS thermoplastic resin is suitable for use in molded article applications utilizing:
a) fully (100%) PE-PS resin, or
b) in combination with inorganic mineral calcium carbonate (CaCO₃) in a specific formula to achieve polymeric properties suitable for the intended use of the products.

Manufacturing of the intended products can be accomplished by injection moulding or blow moulding. The calcium carbonate preferred grade for use in these applications should have softening point between 100 to 120°C, melting point in a range of 115 to 130°C and in pellets form.

### Methods of making PE-PS thermoplastic blends

The mixing of polymer components is commonly achieved by using an internal mixer or an extruder. Extrusion is a method of choice for melt processing of a solid-solid mixture. In the present invention, the solids of HDPE pellet and PS powder were extruded to obtain the desired HDPE/PS composite resin.

Firstly, the HDPE pellet and PS powders were mixed in a 3D tumbler mixer to obtain homogeneous powder mixture. The well mix polymer then underwent melting process in a single-screw nano compounding extruder machine (Salzer Model 305). The extruder setup comprises of a single screw extruder, die section, water bath and palletizer. Melt processing was conducted at different temperature profiles owing to large differences in melting point between HDPE (approx. 120°C) and PS (approx. 50°C). The setting of the five temperature zones used were specified in Table 2. Extruded HDPE/PS mixture exiting the single die opening in the form of polymer strands were cooled in a water bath, and subsequently pelletized.

**Table 2 Temperature setting for mixing and extrusion of HDPE/PS Formulation**

| Formulation HDPE/PS | Zone 1 (°C) | Zone 2 (°C) | Zone 3 (°C) | Zone 4 (°C) | Zone 5 (°C) | Rotation (rpm) |
|---|---|---|---|---|---|---|
| 80/20 | Heater off | 180 | 185 | 185 | 170 | 45/50 ± 5 |
| 60/40 | Heater off | 175/165 | 180/167 | 180/167 | 175/165 | 40/45 ± 5 |
| 40/60 | Heater off | 175/165 | 180/167 | 180/167 | 170/165 | 40/45 ± 5 |

### Extrusion of HDPE/PS composite at different PS concentration

In one of the preferred embodiments of the present invention is a formulation comprises 80% HDPE + 20% PS. However, additional formulations of 60%HDPE + 40%PS and 40%HDPE + 60%PS were also prepared.

### A) Extrusion of HDPE/PS (80/20) composite

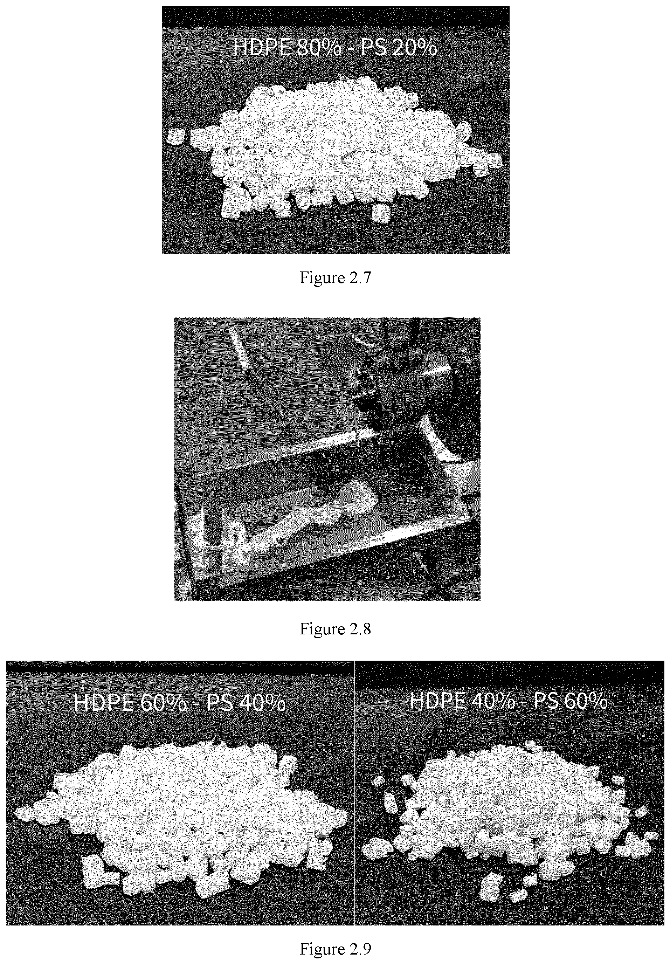

The formulation of HDPE/PS at 80/20 ratio exhibited smooth flowability during extrusion allowing homogenous polymer composite resin to be produced as shown in Fig. 2.7.

This could be attributed to higher degree of friction occurring at lower concentration of PS resulting in higher resistance on the screw blades. Such occurrence facilitated good shearing between HDPE and PS, and thus promoting good adhesion bonding. Fast and continuous extrusion process was achieved whereby 4 to 6kg/day of HDPE/PS resin was extruded and palletized. A total of around 27.5 kg of palletized HDPE/PS resin was prepared.

### B) Extrusion of HDPE/PS at higher PS content of 40% and 60%

At higher PS content of 60%, inhomogeneity in polymer composite resin was observed from discontinuous strands produced. It is believed that some degree of separation between the HDPE and PS compound had occurred during melt processing especially for 60% PS content formulation. Considering that PS has low melting point of approximately 50°C, shear thinning may have occurred resulting in low adhesion between the two components. Melt processing temperature adjustments as indicated in Table 2 are required to extrude polymer blends containing higher percentage of PS.

### Characterization of HDPE, PS and HDPE/PS Composite

The thermoplastic PE-PS blends are further characterized using thermogravimetric analysis (TGA), differential scanning calorimetry (DSC) and scanning electron microscopy (SEM).

### A) Differential Scanning Calorimetry (DSC) Analysis

DSC is a thermal analysis technique that measure heat flow into or out of a polymer sample as a function of temperature or time. In the present invention, the DSC was used to study the melting point and crystallization behavior of raw HDPE, raw PS and HDPE/PS composites with PS content of 20%, 40% and 60%. The analysis is important in determining the homogeneity of the mixture and the interactions between HDPE and PS prior to polymer injection blow moulding processing. The interactions could either:
- improve the mixture dispersion of the PS particles in the HDPE matrix, or
- decrease the effectiveness of the PS particles surface that would in turn decrease the HDPE/PS composite viscosity.

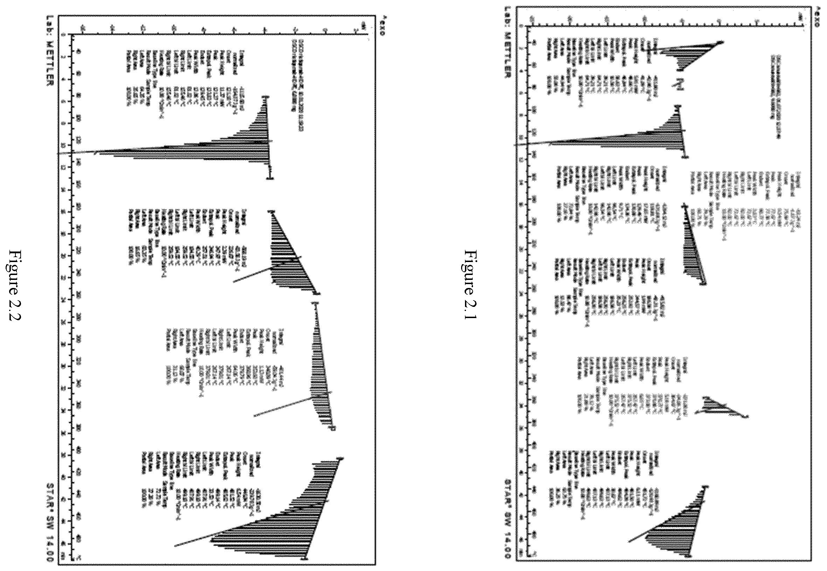

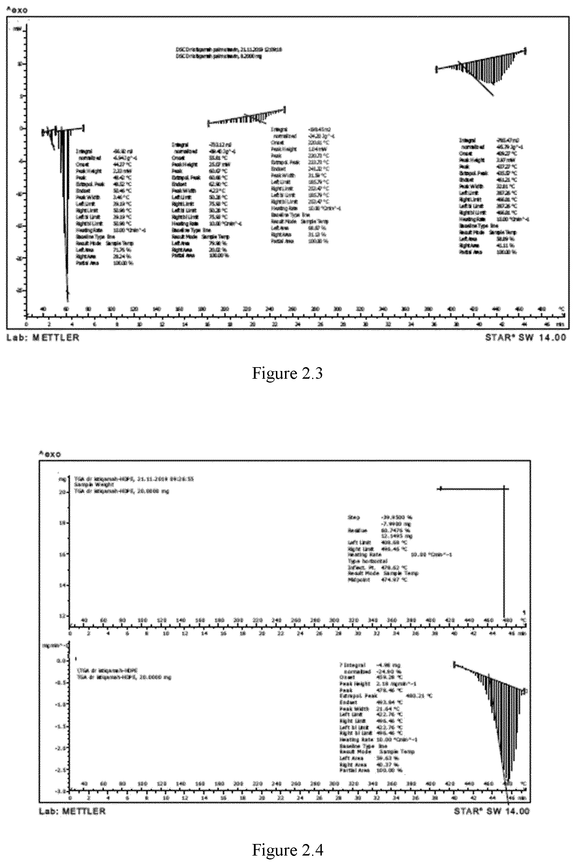

Fig. 2.1 shows the DSC curve for HDPE/PS (80/20) composite (not according to the invention) in which melting enthalpy of HDPE and PS phases were determined at 131.68 J/g and 42.90 J/g respectively. In comparison, the melting enthalpy for raw HDPE is 164.07 J/g (Fig. 2.2) and raw PS is 6.94 J/g (Fig. 2.3). The change in the melting enthalpy is possibly related to the presence of the PS phase which influenced the crystallinity of the HDPE in the HDPE/PS composite i.e. different formation of crystals was established. The presence of PS also enhances the heat transfer between intermolecular chains and imparts faster melting of the HDPE phase.

The effect of higher PS content on the melting enthalpy and melting temperature for both HDPE and PS phases in HDPE/PS composite are tabulated in Table 3. As expected, the melting enthalpy for HDPE phase decreases with PS content but increases for PS phase.

Unlike melting enthalphy, the effect of PS phase on the melting temperature of HDPE crystals was less clear. A small shift from 121.18°C to 118.81°C was observed for raw HDPE and HDPE crystals from HDPE/PS composite (80/20). The melting enthalpy remained almost stable 118-120 as the PS phase was increased from 20% to 60%. On contrary, the melting temperature of PS phase increases slightly from 41.09 °C to 45.43 °C as the PS phase content was increased from 20wt.% to 60wt.%.

**Table 3 Melting enthalpy and melting temperature for HDPE/PS composite at different PS content.**

| HDPE/PS Ratio | Melting enthalpy (J/g) | | Melting temperature (°C) | |
|---|---|---|---|---|
| | HDPE | PS | HDPE | PS |
| 80/20 | 131.68 | 42.9 | 118.81 | 41.09 |
| 60/40 | 94.09 | 58.18 | 120.46 | 44.75 |
| 40/60 | 72.96 | 74.69 | 118.69 | 45.43 |

### B) Thermogravimetric Analysis (TGA)

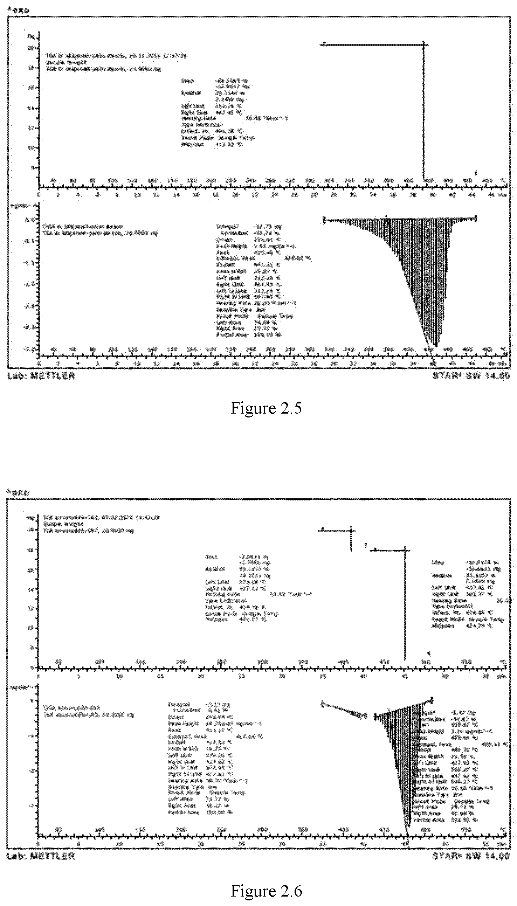

TGA analysis was employed to measure a change in mass (degradation) of a polymer sample over time as the temperature changes. The TGA curves show that the raw HDPE decomposes between 408.7 °C and 496.5 °C (Fig. 2.4), while raw PS decomposes between 312.3 °C and 467.9 °C (Fig. 2.5). For HDPE/PS composite, two degradation peaks were observed (Fig. 2.6); PS decomposition peak at the lower temperature followed by the degradation peak for HDPE at higher temperature.

Overall degradation data for raw HDPE, raw PS and HDPE/PS composite at different PS contents are summarized in Table 4. As can be seen, thermal degradation initiation for HDPE increases from 408.7 °C to slightly over 440 °C when existed as HDPE/PS composite at 40-60% PS content. Similarly, the degradation temperature for PS increases significantly when existed as a composite compared to raw PS. The results indicated that interactions between PS and HDPE in HDPE/PS composite helps stabilized both the HDPE and PS phases, thus increases the degradation temperature.

**Table 4 Overall polymer blends degradation data by TGA analysis**

| HDPE/PS formulation | HDPE | | PS | |
|---|---|---|---|---|
| | Initial degradation (°C) | Residue (%) | Initial degradation (°C) | Residue (%) |
| 100% HDPE | 408.68 | 60.75 | - | - |
| 80/20 | 437.82 | 35.93 | 373.08 | 91.5 |
| 60/40 | 447.75 | 10.22 | 351.39 | 58.6 |
| 40/60 | 444.14 | 7.76 | 355.96 | 45.5 |
| 100% PS | - | - | 312.26 | 7.4 |

### Molded articles utilizing PE-PS thermoplastic polymer resin produced using blow injection moulding.

The PE-PS thermoplastic resin can be applied for making various packaging products. One of the products illustrated in this invention is jerry can container. The PE-PS resin is utilized fully or in combination with calcium carbonate and a small fraction of coloring material to produce jerry can containers. The formulation may be adjusted to match the properties of the molded article made from synthetic polymer. The formulations for molded article can be adjusted according to the following combinations:

**Table 5 shows the formulations for molded article**

| Material | Composition (wt.%) |
|---|---|
| PE-PS resin | 40 to 100 |
| Calcium carbonate | 0 to 60 |
| Coloring pigments | 0 to 0.7 |

### Injection Blow Moulding Test

Following successful extrusion of the HDPE and PS mixture into HDPE/PS composite resin, three injection blow moulding tests were conducted at Gaia Sdn Bhd factory. In the first and second tests, a total of 27kg of HDPE/PS resin (80/20 ratio) was used whereas in the third test, 13kg of HDPE/PS resin (60/40 ratio) were consumed. The HDPE/PS resin was first heated to 170-180°C in the extruder before it was blown into a jerry can mold cavity. Compressed air was used to inflate the molten polymer into finished jerry can article.

### Blow moulding of HDPE/PS (80/20 ratio) composite resin

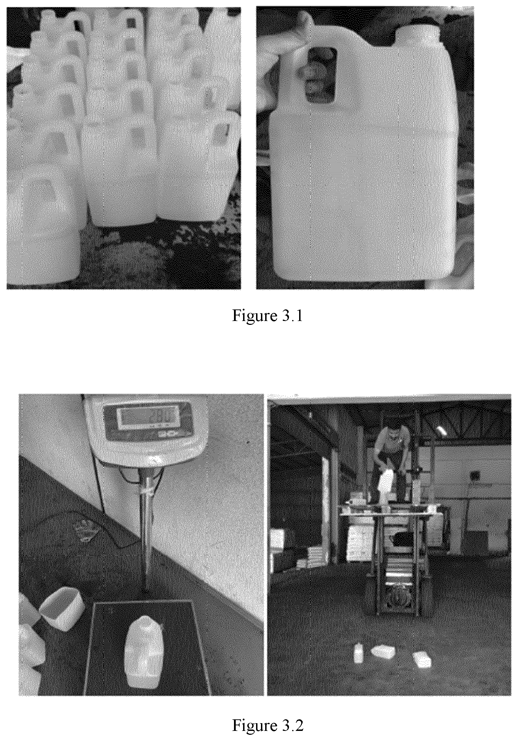

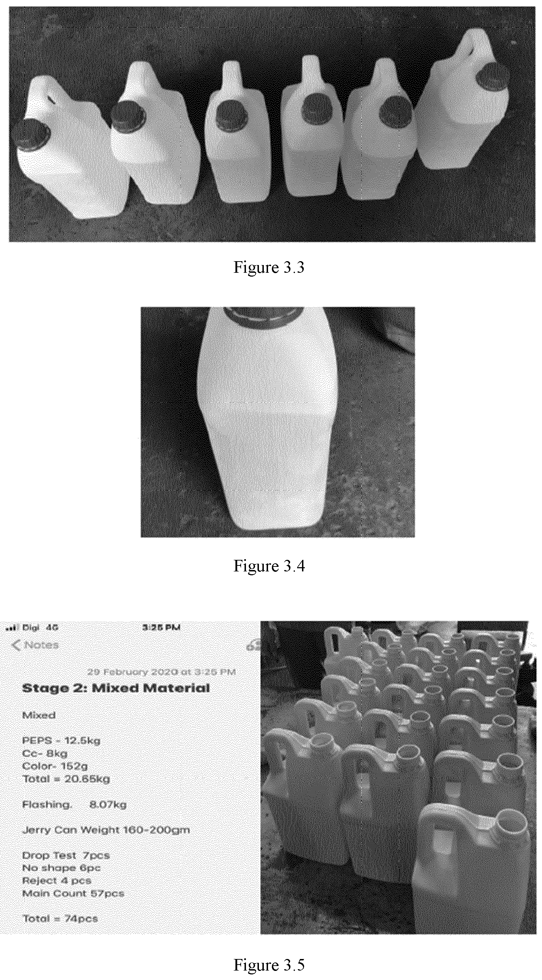

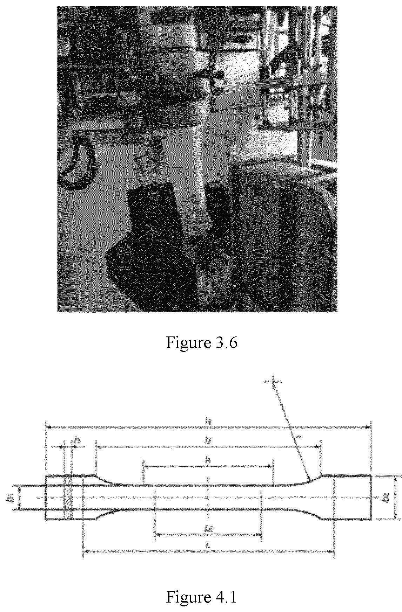

A 100% HDPE/PS (80/20) polymer composite (not according to the invention) was used in the first batch of blow moulding test. No external HDPE and calcium carbonate were added. With small adjustments to heating temperature and related machine operation settings, this polymer resin showed good molding performance whereby feeding, melting, injection and inflation/stretching of polymer film in the mold cavity occurred almost uninterrupted. The smooth blow moulding operation could be attributed to the high interaction between palm stearin and polyethylene molecules which increases the polymer mix mechanical properties. In total, 58 pcs of jerry cans were produced. Well molded Jerry cans produced from this batch are shown in Fig. 3.1.

Drop Test was performed on the freshly molded jerry cans by filling each can with 2.8kg of water in accordance with standard factory drop test using palm oil. Drop test means the exact bottle was dropped several times at different angle at height position of 5 and 8 ft. It is encouraging to observe that jerry cans manufactured using 100% HDPE/PS resin (80/20 ratio) passed both the 5ft and 8ft drop tests (Fig. 3.2).

Standard factory Stacking Test involves stacking eight (8) carton boxes containing six (6) jerry can bottles each. Each jerry can bottle was filled up with 2.8kg of water or 16.8kg of water per carton. As a result, a total weight of 134.4kg was applied throughout the stack. Test conducted for 24 hours (1 day), 48 hours (2 days) and 144 hours (6 days). Interestingly, all jerry cans were able to withstand prolonged exposure to weight/pressure and maintained their original shape and form after 24, 48 and 144 hours (Fig. 3.3) except for one unit that showed slight deformation/defect at bottom side area (Fig. 3.4).

The second batch of blow moulding test was performed using the following formulation; 60% HDPE/PS (80/20 ratio) + 40% CC + Color. All three components were dry mixed in a stainless-steel mixer for around one (1) hr prior to injection into blow moulding machine. Similar to the first batch, blow moulding process was a success after temperature and machine setting fine tuning. In total, 74 pcs of jerry cans were produced.

The third blow moulding test was carried out following standard operation practice at Gaia Sdn Bhd. using 100% HDPE/PS with 60/40 composition ratio. A total of 12 kg of this polymer composite resin was used. The resin was initially heated at 160 °C and flow into the cavity mold. However, uneven material flow was observed possibly due to separation of the components. The material also appeared too soft for jerry can application. The soft material may not be suitable for jerry can product, however it may be useful for other packaging applications.

### Product Analysis - Mechanical Properties & Surface Morphology

These analyses were conducted to evaluate the mechanical properties and surface morphological structure of the blow moulded products (jerry can) at different HDPE/PS formulation by means of pulling test or scientifically known as Tensile Test and Scanning Electron Microscope (SEM).

### A) Tensile Test Preparation

Tensile specimen was prepared by punching out of the jerry can skin in accordance with ASTM D638 method as shown schematically in Fig. 4.1. All samples were tested using an Instron Universal Testing Machine (UTM) with strain rate of 10 mm/min.

### B) Analysis of Tensile Test

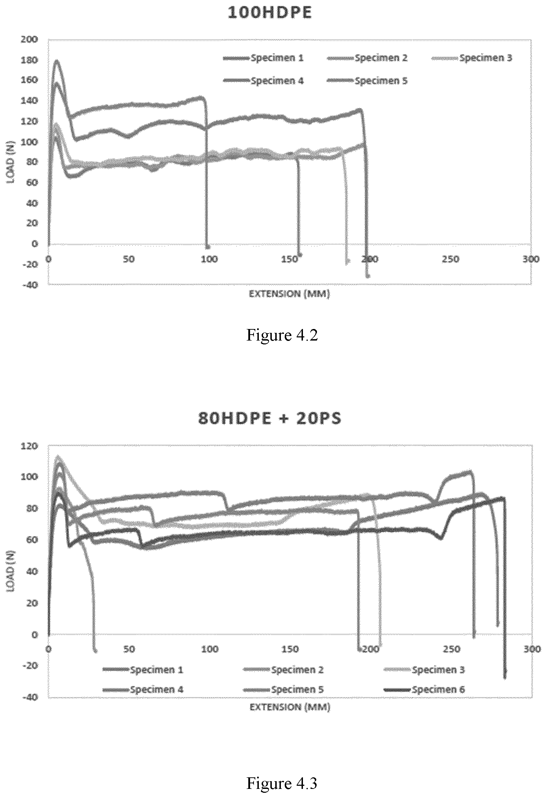

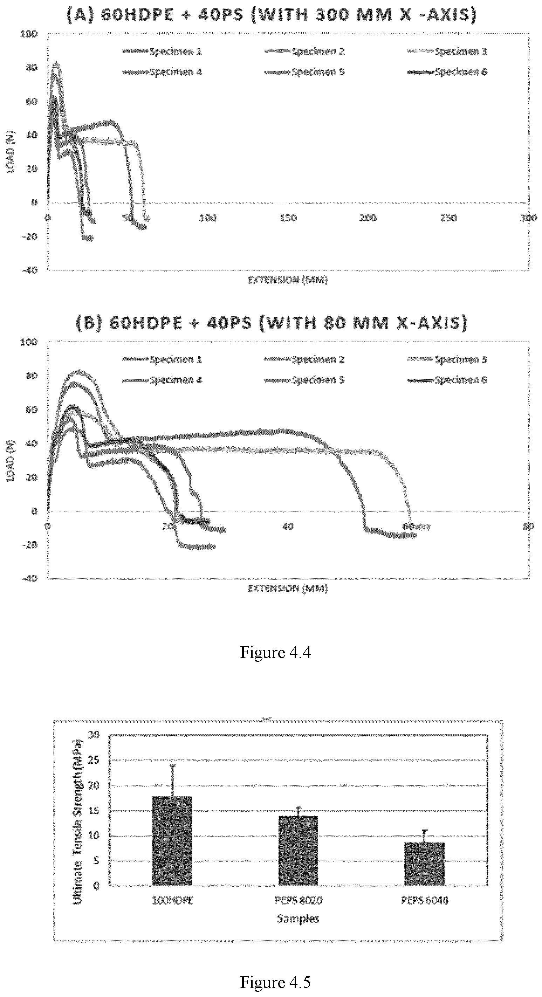

Figs. 4.2 to 4.4 compare the tensile test results presented as graph of load versus extension for 100%HDPE, HDPE/PS (80/20) and HDPE/PS (60/40) formulations. As can be observed, the pattern of the graph for 100% HDPE and HDPE/PS (80/20) composite is rather identical. It is interesting to note that for the HDPE/PS (80/20) composite, a significant elongation can be seen clearly with greater room of plasticity, whereby 4 out of 6 samples exhibited extension greater than 200 mm. In contrast, only one sample exhibited maximum extension up to 200 mm for 100% HDPE. At higher PS content of 40% (Fig. 4.4), the pattern shows a low tensile property for all samples with maximum elongation of 60 mm, indicating low bonding quality between HDPE and PS.

The ultimate tensile properties clearly show a decreasing pattern as a function of PS added to the composite. In all cases (as shown by graphs in Figs. 4.2 to 4.4), as the load was applied, the polymer initially exhibited elastic deformation before it yields and reached maximum limit of load. The slope of the graph at elastic region prior to yielding point is evaluated as elastic modulus, measured from elastic stress (load over cross sectional area) over tensile strain (total elongation over gauge length). At the ultimate tensile strength, the slope of the graph is zero. Both upper and lower yield points are evident on all the curves shown, which was followed by a near horizontal region. At the upper yield point, a small neck forms within the gauge section of the tensile sample. Within this neck, the chains became more oriented, which leads to localized strengthening, which can be evident in all curves, a slight increase in load (stress) until subsequent necking. Consequently, there is a resistance to continued deformation at this point, and samples elongation proceeds by the propagation of this neck region along the gauge length.

Based on the analyses, 100%HDPE and HDPE/PS (80/20) samples are considered as ductile owing to greater fraction of plastic deformation after yielding. Meanwhile, samples for HDPE/PS (60/40) exhibited lower ductility, most likely due to separation between HDPE and PS phases.

Table 6 tabulated important information extracted from the tensile tests to evaluate the effect of palm stearin content in the HDPE/PS matrix on ultimate tensile strength, modulus of elascticity and tensile strain at break. The data was plotted in Figs. 4.5 to 4.7 with error bar to indicate maximum and minimum values attained for all samples tested. The results indicate that as the PS content was increased, the ultimate tensile strength values reduces by approximately 4 to 5 MPa over 20% increment of PS in the formulation. From the consistency point of view, samples of HDPE/PS (80/20) exhibited better result with lower standard deviation compared to the other two formulations.

Moving on to elastic modulus property, the HDPE/PS (80/20) (not according to the invention) composite exhibited the lowest result with a value of 0.12 GPa, which is much lower than the theoretical modulus of HDPE (ranging between 0.57 and 1.5 GPa). It is believed that the presence of PS reduces the viscosity of the HDPE/PS mixture. As for the HDPE/PS (60/40) sample, the modulus property falls within the range of theoretical value for HDPE, but significantly higher than the sample with 20% PS content. The reason for this behavior is unclear, but it could be due to separation between HDPE and PS phases during the blow moulding process, resulting in HDPE-rich specimen used in this test. The low bending for HDPE/PS (60/40) resulted in lower degree of plastic deformation in comparison with samples of HDPE/PS (80/20).

**Table 6 Tensile Properties as a function of palm stearin content**

| Formulation | Ultimate Tensile Strength (MPa) | Modulus of Elasticity (GPa) | Tensile strain at break (mm/mm) |
|---|---|---|---|
| 100% HDPE | 17.77 ± 3.78 | 1.07 ± 0.42 | 171.57 ± 38.37 |
| HDPE/PS (80/20) | 13.82 ± 1.41 | 0.12 ± 0.02 | 220.40 ± 95.87 |
| HDPE/PS (60/40) | 8.60 ± 1.68 | 0.71 ± 0.14 | 39.25 ± 17.93 |

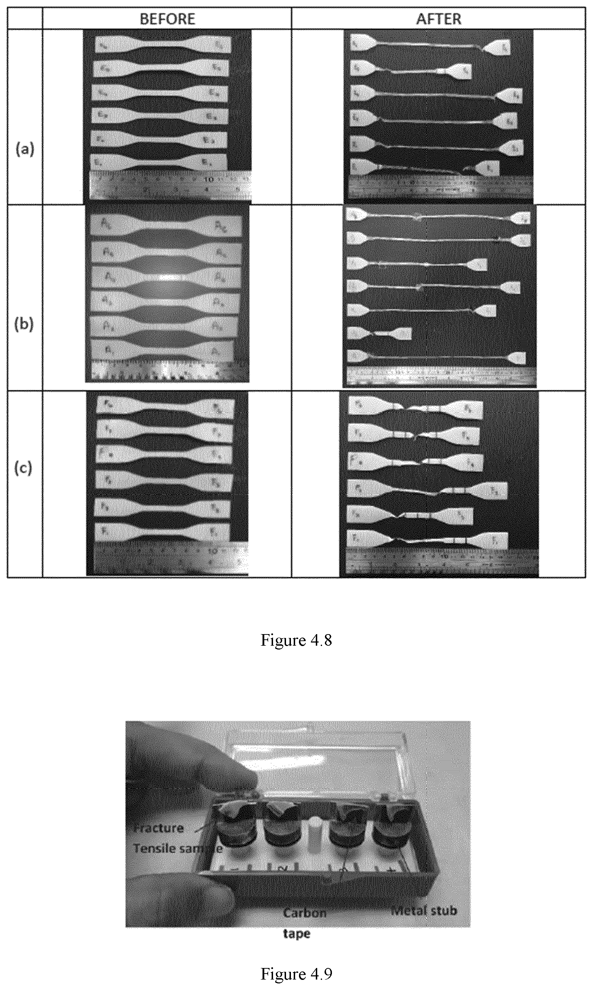

Fig. 4.8 visually compares samples before and after the tensile test. Samples for HDPE/PS (80/20) composite showed significant elongation as evident from load-elongation curves (Fig. 4.3), with exception of one sample (probably due to sample misalignment during testing or poor bonding quality at that particular section). In addition, both 100%HDPE and HDPE/PS (80/20) samples showed several stages of strengthening mechanism. In contrast, samples for HDPE/PS (60/40) showed low plastic deformation (attributed to non-uniform dispersion of PS), and hence no strengthening mechanism occurred after experiencing first yielding.

### C) Morphological Analysis by Scanning Electron Micrographs (SEM)

The purpose of SEM analysis is to evaluate the quality of the HDPE/PS mixture at different PS content as well as the morphological changes after tensile test. This is important for justification of sample analysis results obtained, particularly the tensile test results. All images were captured using a Phenom Scanning Electron Microscope (SEM) under secondary electron imaging (SE) mode. Fig. 4.9 shows an example of the tensile fracture used in the SEM analysis. The samples were mounted on a metal stub by carbon adhesion tape. Due to non-conductivity of the thermoplastics, all samples were coated with a conductive material before the samples were analyzed.

### D) Surface Morphology

Figs. 4.10(a) to (d) show the SEM images for all the polymer resins at magnification of 1000X. These images clearly showed differences in the nature of materials present in the mixture. Images for 100%HDPE, HDPE/PS (80/20) and HDPE/PS (60/40) resins are identical, possibly due to adequate mixing between HDPE and PS. However, at higher PS content of 60%, (HDPE/PS (40/60)), some regions are partially covered by molten thermoplastics as can be clearly seen at higher magnifications as shown by Figs. 4.10 (e) and (f). The SEM results indicate that sufficient dispersion of PS is attainable at PS content lower than 60%.

### E) Surface of Fracture Edge

Figs. 4.11 and 4.12 compare the morphology of 100%HDPE and HDPE/PS (80/20) at the surface edge, near the necking area of the fractured tensile samples. Fig. (a) and (b) show magnifications at 1000x and 5000x respectively. The line layers or chain-folded lamellae represent the direction of tensile load, produced a highly oriented structure. As can be seen from both samples, greater thickness of lamellae was present in the HDPE/PS (80/20) as compared to 100%HDPE. The images also showed some of the lamellae were destroyed, signaling weak bonding.

### Advantages presented by the present invention are as follows:

A significant proportion of petroleum-based polyolefin (60%) is substituted with natural biodegradable material palm stearin which lends degradability to the formed article. Using lower percentage of synthetic polyolefin is advantageous in reducing non-biodegradable plastic waste released to the environment.

Palm stearin is renewable and readily available at a cost comparable to petrochemical based polyethylene. It can be used in the blending without prior treatment, thus provides real advantage in keeping the production cost at par with fully synthetic articles.

Synthetic polyolefin and natural palm stearin are compatible, producing uniform blends by melt processing method using an extruder machine. Due to microscopic mixing achieved (uniform distributions and strong adhesion between the PE and PS materials), smooth extrusion of the polymer mixture into PE-PS pellets was realized.

HDPE-PS thermoplastic blend was achieved without addition of a compatibilizer or coupling agent. The extruded thermoplastic HDPE-PS resin showed good thermal, mechanical and rheological characteristics.

The molded article (jerry can) produced using 100% HDPE-PS (80/20) (not according to the invention) resin by blow moulding showed excellent tensile strength performance. The HDPE-PS resin molded in combinations with calcium carbonate as filler by blow moulding exhibited, promising plastic characteristics suited for less demanding load and impact applications. PE-PS resin is an attractive material for use in wide range of applications due to good polymeric properties and favourable production cost.

### Industrial Applicability

The present invention has a high commercial value considering the excellent polymeric performance of the PE-PS thermoplastic resin and favorable manufacturing costs. The former renders the product of this invention suitable for wide range of applications within the plastic packaging industries whereas the latter allows for the cost of production to remain competitive. Utilizing this resin in the making of molded articles, is also attractive as the presence of natural biodegradable palm stearin of 60wt.% in the formulation contributed to potential significant reduction in non-biodegradable plastic waste pollution.

The product of the present invention will be directly used in the manufacture of jerry can container for existing customers in middle east. With the addition of natural biodegradable content, the product will be appealing for more advanced market in China, Europe and Australia with estimated combined value of around RM15 million.

## Claims

1. A polymer resin composition comprising thermoplastic PE-PS blends **characterized in that** the thermoplastic PE-PS blends comprise a mixture of:
i) 40 weight% of petroleum-based polyolefin (PE); and
ii) 60 weight% of natural biodegradable palm-based stearin (PS).

2. The polymer resin composition according to claim 1, **characterized in that** the petroleum-based polyolefin (PE) comprises of:
i) low-density polyethylene (LDPE), or
ii) high-density polyethylene (HDPE).

3. The polymer resin composition according to claim 1, **characterized in that** the natural biodegradable palm-based stearin (PS) is a solid fraction derived from fractionation process of palm oil and palm kernel oil.

4. The polymer resin composition according to Claim 1 or Claim 3, **characterized in that** the natural biodegradable palm-based stearin (PS) is a refined, bleached and deodorised (RBD) palm-based stearin derived from fractionation process of palm oil and palm kernel oil.

5. A process for preparing a polymer resin composition according to any one of the preceding claims 1 to 4, **characterized in that** the process comprises the steps of:
i) mixing the polyolefin and palm stearin materials using an internal mixer unit or an extruder machine for melting the mixture to obtain uniform dispersion of the materials; and
ii) the thermoplastic PE-PS blends are extruded into pellets form.

6. The process for preparing a polymer resin composition according to claim 5, **characterized in that** the process further comprises the steps of:
i) mixing the thermoplastic PE-PS blends which comprise of high-density polyethylene (HDPE) resins and PS powders using a 3D shaker;
ii) the thermoplastic PE-PS blends obtained from step (i) are subjected to a melting process using a single-screw extruder, and feeding the materials thus obtained at a constant feed rate into a series of heated zones set as follows:
a) first zone at room temperature,
b) second zone at 170 to 180°C,
c) third zone at 180 to 185°C,
d) fourth zone at 180 to 185°C, and
e) the final zone at 170°C,
iii) after the extrusion process in step (ii), the hot polymeric mass strands are shaped by using a die and cooled in a water bath to allow the polymeric mass strand to be pelletized; and
iv) the thermoplastic PE-PS blends from step (iii) are further characterized using Thermogravimetric Analysis, Differential Scanning Calorimetry Analysis, and Tensile Test.

7. Pellets formed from the polymer resin composition and obtained according to the process as claimed in Claim 5 or Claim 6 **characterized in that** the thermoplastic PE-PS blends are extruded into pellets form.

8. Use of the polymer resin composition according to any one of the preceding claims 1 to 4 or of the pellets according to claim 7 for the manufacture of molded articles.

9. The use of the polymer resin composition according to claim 8, **characterized in that** the molded article utilizes:
a) fully 100% PE-PS resin, or
b) in combination with inorganic mineral calcium carbonate (CaCO₃).

10. The use of the polymer resin composition according to claim 8, wherein the molded articles are made by means of injection molding or blow molding.

11. The use of the polymer resin composition according to Claim 10 **characterized in that** the molded article manufactured is a packaging product such as jerry can container.

12. A molded article manufactured from the polymer resin composition according to any one of claims 1 to 4 or of the pellets according to claim 7, **characterized in that** it is produced using the thermoplastic blend comprising high-density polyethylene (HDPE) and palm-based stearin (PS) and with calcium carbonate as filler.

13. The molded article such as jerry can container manufactured from the polymer resin composition according to any one of claims 1 to 4 or of the pellets according to claim 7, **characterized in that** it is produced by means of blow molding process.

## Patentansprüche

1. Eine Polymerharzzusammensetzung, die thermoplastische PE-PS-Mischungen umfasst, **dadurch gekennzeichnet, dass** die thermoplastischen PE-PS-Mischungen eine Mischung aus folgenden Bestandteilen umfassen:
i) 40 Gew.-% Polyolefin (PE) auf Erdölbasis; und
ii) 60 Gew.-% natürlich biologisch abbaubarem Stearin auf Palmbasis (PS).

2. Die Polymerharzzusammensetzung gemäß Anspruch 1, **dadurch gekennzeichnet, dass** das Polyolefin (PE) auf Erdölbasis umfasst:
i) Polyethylen niedriger Dichte (LDPE) oder
ii) Polyethylen hoher Dichte (HDPE).

3. Die Polymerharzzusammensetzung gemäß Anspruch 1, **dadurch gekennzeichnet, dass** das natürliche biologisch abbaubare Stearin auf Palmbasis (PS) eine feste Fraktion ist, die aus dem Fraktionierungsprozess von Palmöl und Palmkernöl gewonnen wird.

4. Die Polymerharzzusammensetzung gemäß Anspruch 1 oder Anspruch 3, **dadurch gekennzeichnet, dass** das natürliche biologisch abbaubare Stearin auf Palmbasis (PS) ein raffiniertes, gebleichtes und desodoriertes (RBD) Stearin auf Palmbasis ist, das aus dem Fraktionierungsprozess von Palmöl und Palmkernöl gewonnen wird.

5. Verfahren zur Herstellung einer Polymerharzzusammensetzung gemäß einem der vorstehenden Ansprüche 1 bis 4, **dadurch gekennzeichnet, dass** das Verfahren die folgenden Schritte umfasst:
i) Mischen der Polyolefin- und Palmstearinmaterialien unter Verwendung einer internen Mischeinheit oder einer Extrudermaschine zum Schmelzen der Mischung, um eine gleichmäßige Dispersion der Materialien zu erhalten; und
ii) die thermoplastischen PE-PS-Mischungen werden zu Pellets extrudiert.

6. Verfahren zur Herstellung einer Polymerharzzusammensetzung gemäß Anspruch 5, **dadurch gekennzeichnet, dass** das Verfahren ferner die folgenden Schritte umfasst:
i) Mischen der thermoplastischen PE-PS-Mischungen, die aus hochdichten Polyethylenharzen (HDPE) und PS-Pulvern bestehen, unter Verwendung eines 3D-Rüttlers;
ii) die in Schritt (i) erhaltenen thermoplastischen PE-PS-Mischungen werden einem Schmelzprozess unter Verwendung eines Einschneckenextruders unterzogen, und die so erhaltenen Materialien werden mit einer konstanten Zufuhrrate in eine Reihe von beheizten Zonen zugeführt, die wie folgt eingestellt sind:
a) erste Zone bei Raumtemperatur,
b) zweite Zone bei 170 bis 180 °C,
c) dritte Zone bei 180 bis 185 °C,
d) vierte Zone bei 180 bis 185 °C und
e) die letzte Zone bei 170 °C,
iii) nach dem Extrusionsprozess in Schritt (ii) werden die heißen Polymerstränge unter Verwendung einer Düse geformt und in einem Wasserbad gekühlt, damit der Polymerstrang pelletiert werden kann; und
iv) die thermoplastischen PE-PS-Mischungen aus Schritt (iii) werden weiter mittels thermogravimetrischer Analyse, Differential-Scanning-Kalorimetrie-Analyse und Zugversuch charakterisiert.

7. Pellets, die aus der Polymerharzzusammensetzung gebildet und gemäß dem Verfahren nach Anspruch 5 oder Anspruch 6 erhalten werden, **dadurch gekennzeichnet, dass** die thermoplastischen PE-PS-Mischungen zu Pellets extrudiert werden.

8. Verwendung der Polymerharzzusammensetzung gemäß einem der vorstehenden Ansprüche 1 bis 4 oder der Pellets gemäß Anspruch 7 zur Herstellung von Formkörpern.

9. Verwendung der Polymerharzzusammensetzung gemäß Anspruch 8, **dadurch gekennzeichnet, dass** der Formkörper Folgendes verwendet:
a) zu 100 % PE-PS-Harz oder
b) in Kombination mit anorganischem mineralischem Calciumcarbonat (CaCO₃).

10. Verwendung der Polymerharzzusammensetzung gemäß Anspruch 8, wobei die Formkörper mittels Spritzgießen oder Blasformen hergestellt werden.

11. Verwendung der Polymerharzzusammensetzung gemäß Anspruch 10, **dadurch gekennzeichnet, dass** der hergestellte Formkörper ein Verpackungsprodukt wie beispielsweise ein Kanisterbehälter ist.

12. Ein Formteil, das aus der Polymerharzzusammensetzung gemäß einem der Ansprüche 1 bis 4 oder aus den Pellets gemäß Anspruch 7 hergestellt ist, **dadurch gekennzeichnet, dass** es unter Verwendung der thermoplastischen Mischung aus hochdichtem Polyethylen (HDPE) und Palmstearin (PS) und mit Calciumcarbonat als Füllstoff hergestellt ist.

13. Der Formkörper, wie beispielsweise ein Kanisterbehälter, der aus der Polymerharzzusammensetzung gemäß einem der Ansprüche 1 bis 4 oder aus den Pellets gemäß Anspruch 7 hergestellt ist, **dadurch gekennzeichnet, dass** er mittels eines Blasformverfahrens hergestellt ist.

## Revendications

1. Composition de résine de polymère comprenant des mélanges PE-PS thermoplastiques **caractérisée par le fait que** les mélanges PE-PS thermoplastiques comprennent un mélange de :
i) 40 % en poids de polyoléfine à base de pétrole (PE) ; et
ii) 60 % en poids de stéarine naturelle biodégradable à base de palme (PS).

2. Composition de résine de polymère selon la revendication 1, **caractérisée par le fait que** la polyoléfine à base de pétrole (PE) comprend :
i) du polyéthylène basse densité (LDPE), ou
ii) polyéthylène haute densité (PEHD).

3. Composition de résine de polymère selon la revendication 1, **caractérisée par le fait que** la stéarine naturelle biodégradable à base de palme (PS) est une fraction solide dérivée du processus de fractionnement de l'huile de palme et de l'huile de palmiste.

4. Composition de résine de polymère selon la revendication 1 ou la revendication 3, **caractérisée par le fait que** la stéarine naturelle biodégradable à base de palme (PS) est une stéarine à base de palme raffinée, blanchie et désodorisée (RBD) dérivée du processus de fractionnement de l'huile de palme et de l'huile de palmiste.

5. Procédé de préparation d'une composition de résine de polymère selon l'une quelconque des revendications précédentes 1 à 4, **caractérisé par le fait que** le procédé comprend les étapes consistant à :
i) mélanger les matériaux de polyoléfine et de stéarine de palme à l'aide d'un mélangeur interne ou d'une machine à extrusion pour faire fondre le mélange afin d'obtenir une dispersion uniforme des matériaux ; et
ii) les mélanges PE-PS thermoplastiques sont extrudés sous forme de pastilles.

6. Procédé de préparation d'une composition de résine de polymère selon la revendication 5, **caractérisé par le fait que** le procédé comprend en outre les étapes consistant à :
i) mélanger les mélanges PE-PS thermoplastiques qui comprennent des résines de polyéthylène haute densité (PEHD) et des poudres de PS à l'aide d'un agitateur secoueur 3D ;
ii) les mélanges PE-PS thermoplastiques obtenus à l'étape (i) sont soumis à un processus de fusion à l'aide d'une extrudeuse à monovis, et les matériaux ainsi obtenus sont introduits à une vitesse d'alimentation constante dans une série de zones chauffées établies comme suit :
a) première zone à température ambiante
b) deuxième zone à 170 à 180°C,
c) troisième zone à 180 à 185°C,
d) quatrième zone à 180 à 185°C, et
e) la zone finale à 170°C,
iii) après le processus d'extrusion à l'étape (ii), les brins de masse polymère chauds sont façonnés à l'aide d'une filière et refroidis dans un bain d'eau pour permettre aux brins de masse polymère d'être transformés en pastille; et
iv) les mélanges PE-PS thermoplastiques de l'étape (iii) sont en outre **caractérisés par** analyse thermogravimétrique, analyse calorimétrique différentielle à balayage et essai de traction.

7. Pastilles formés à partir de la composition de résine de polymère et obtenues conformément au procédé tel que défini à la revendication 5 ou à la revendication 6, **caractérisée par le fait que** les mélanges PE-PS thermoplastiques sont extrudés sous forme de pastilles.

8. Utilisation de la composition de résine de polymère selon l'une quelconque des revendications précédentes 1 à 4 ou des pastilles selon la revendication 7 pour la fabrication d'articles moulés.

9. Utilisation de la composition de résine de polymère selon la revendication 8, **caractérisée par le fait que** l'article moulé utilise :
a) Entièrement 100% de la résine PE-PS, ou
b) en combinaison avec du carbonate de calcium minéral inorganique (CaCO₃).

10. Utilisation de la composition de résine de polymère selon la revendication 8, dans laquelle les articles moulés sont fabriqués au moyen d'un moulage par injection ou d'un moulage par soufflage.

11. Utilisation de la composition de résine de polymère selon la revendication 10, **caractérisée par le fait que** l'article moulé fabriqué est un produit d'emballage tel qu'un conteneur jerrycan.

12. Article moulé fabriqué à partir de la composition de résine de polymère selon l'une quelconque des revendications 1 à 4 ou des pastilles selon la revendication 7, **caractérisé par le fait qu'**il est obtenu à l'aide du mélange thermoplastique comprenant du polyéthylène haute densité (HDPE) et de la stéarine à base de palme (PS) et avec du carbonate de calcium comme charge.

13. Article moulé tel qu'un conteneur jerrycan fabriqué à partir de la composition de résine de polymère selon l'une quelconque des revendications 1 à 4 ou des pastilles selon la revendication 7, **caractérisé en ce qu'**il est obtenu au moyen d'un procédé de moulage par soufflage.
